# EUROPÄISCHE PATENTSCHRIFT

(11) **EP 2 331 318 B1**
(45) Veröffentlichungstag und Bekanntmachung des Hinweises auf die Patenterteilung: **09.01.2013**
(21) Anmeldenummer: 09782448.6
(22) Anmeldetag: 01.09.2009
(51) Int. Cl.: B29C 70/06, B32B 5/28, B32B 7/02, B32B 15/08, B64C 1/00

(54) **FASERVERBUNDBAUTEIL ZUR ENERGIEABSORPTION IM CRASH-FALL FÜR EIN LUFT- ODER RAUMFAHRZEUG, RUMPFSTRUKTURABSCHNITT EINES LUFT- ODER RAUMFAHRZEUGS UND LUFT- ODER RAUMFAHRZEUG**
FIBER COMPOSITE COMPONENT FOR ENERGY ABSORPTION IN THE EVENT OF A CRASH FOR AN AIRCRAFT OR SPACECRAFT, FUSELAGE STRUCTURAL SECTION OF AN AIRCRAFT OR SPACECRAFT, AND AIRCRAFT OR SPACECRAFT
PIÈCE EN FIBRE COMPOSITE POUR L'ABSORPTION D'ÉNERGIE EN CAS D'ACCIDENT POUR UN AVION OU UN ENGIN SPATIAL, SECTION DE STRUCTURE DE FUSELAGE D'UN AVION OU D'UN ENGIN SPATIAL ET AVION OU ENGIN SPATIAL

(30) Priorität: 29.09.2008 DE 102008042452; 29.09.2008 US 100935 P
(43) Veröffentlichungstag der Anmeldung: 15.06.2011
(73) Patentinhaber: Airbus Operations GmbH, 21129 Hamburg (DE)
(72) Erfinder: TACKE, Stefan, 21614 Buxtehude (DE); ROMING, Thorsten, 21709 Himmelpforten (DE)
(74) Vertreter: Isarpatent
(86) Internationale Anmeldenummer: PCT/EP2009/061264
(87) Internationale Veröffentlichungsnummer: WO 2010/034594

(56) Entgegenhaltungen:
- WO-A-2007/094686
- WO-A-2008/105897
- WO-A-2009/014486
- GB-A- 2 041 824
- US-A1- 2008 029 186

## Beschreibung

Die vorliegende Erfindung bezieht sich auf ein Faserverbundbauteil eines Luft- oder Raumfahrzeugs, einen Rumpfstrukturabschnitt und ein Luft- oder Raumfahrzeug.

Obwohl auf beliebige Faserverbundbauteile anwendbar, werden die vorliegende Erfindung sowie die ihr zugrunde liegende Problematik nachfolgend mit Bezug auf Faserverbundbauteile, insbesondere Kohlefaserkunststoff (CFK)-Bauteile, zum Beispiel Spante und Stützelemente einer Rumpfstruktur eines Flugzeugs, näher erläutert.

Rumpfstrukturen im Flugzeugbau bestehen derzeit aus (zum Beispiel mit Stringern) versteiften Hautfeldern, Spanten, Querträgern für den Fußboden des Passagierraums, sowie aus Querträgern oder einem Fachwerk für den Boden des Frachtraums. Die einzelnen Bauteile werden im Allgemeinen aus Metall hergestellt und mit Nieten und Bolzen verbunden. Im Falle eines vertikalen Aufpralls bzw. Crash eines Abschnitts der Rumpfstruktur, der so genannten Rumpftonne, auf den Boden wird durch das elastisch-plastische Verhalten der Metallbauteile ein großer Teil der Aufprallenergie absorbiert, wodurch die Sicherheit der Passagiere gewährleistet ist.

Die Verwendung von Faserverbundbauteilen ist im Flugzeugbau zum Beispiel für Hautfelder und deren Versteifungen durch Stringer weit verbreitet. Sie werden zum Beispiel durch Vakuuminfusionsverfahren zum Einbringen einer Matrix, beispielsweise eines Epoxidharzes, in Faserhalbzeuge und nachfolgendem Härten hergestellt. Infusionsverfahren können gegenüber anderen bekannten Verfahren zur Herstellung von Faserverbundbauteilen, wie beispielsweise dem Prepreg-Verfahren, kostengünstig sein, weil dies die Verwendung von kostengünstigeren Faserhalbzeugen erlaubt.

In zukünftigen Flugzeugen gewinnen neue, leichtere Werkstoffe, vor allem CFK, eine immer größere Bedeutung für den Einsatz in der tragenden Rumpfstruktur. So ist die Verwendung von Faserverbundmaterialien für alle wesentlichen Bauteile darin, Haut und Stringer, Spante und Querträger vorgesehen. Das Faserverbundmaterial weist zwar eine hohe Festigkeit auf, kann dann aber durch Krafteinwirkung bei einem Aufprall schlagartig versagen. Dieses schon spröde Verhalten führt im Crash-Fall dazu, dass große Bereiche der Rumpfstruktur versagen, ohne dass sie ausreichend Aufprallenergie absorbieren.

Es ist daher die Aufgabe der vorliegenden Erfindung, ein Faserverbundbauteil zur Energieabsorption im Crash-Fall für ein Luft- oder Raumfahrzeug, einen entsprechenden Rumpfstrukturabschnitt und ein Luft- oder Raumfahrzeug bereitzustellen, welche die obigen Nachteile nicht mehr aufweisen bzw. in einem erheblichen Maß reduzieren und weitere Vorteile schaffen.

Erfindungsgemäß wird diese Aufgabe durch ein Faserverbundbauteil mit den Merkmalen des Patentanspruchs 1, einen Rumpfstrukturabschnitt mit den Merkmalen des Patentanspruchs 7 und ein Luft- oder Raumfahrzeug mit den Merkmalen des Patentanspruchs 8 gelöst.

Demgemäß wird ein Faserverbundbauteil zur Energieabsorption im Crash-Fall für ein Luft- oder Raumfahrzeug bereitgestellt. Das Faserverbundbauteil ist als Laminataufbau aus CFK-Schichten und zumindest einer integrierten, gegenüber den CFK-Schichten korrosionsbeständigen Metallfolienschicht ausgebildet.

Ferner wird ein Rumpfstrukturabschnitt eines Luft- oder Raumfahrzeugs geschaffen. Der Rumpfstrukturabschnitt weist als Crash- bzw. Aufprallbereich zumindest ein oben angegebenes Faserverbundbauteil auf.

In den Unteransprüchen finden sich vorteilhafte Ausgestaltungen und Verbesserungen der vorliegenden Erfindung.

Eine grundlegende Idee der Erfindung besteht darin, zumindest eine gegenüber CFK-Schichten korrosionsbeständige Metallfolienschicht in CFK-Schichten des Faserverbundbauteils zu integrieren.

Somit weist die vorliegende Erfindung gegenüber den eingangs genannten Ansätzen unter anderem den Vorteil auf, dass die Anwendung eines derartigen Metallschicht-CFK-Schicht-Laminats die Vorteile beider Materialien verbindet, nämlich die Duktilität des Metalls und die hohe Festigkeit einschließlich dem geringen Gewicht der CFK-Schichten.

Die zumindest eine gegenüber CFK-Schichten korrosionsbeständige Metallfolienschicht wird zwischen zumindest zwei CFK-Schichten angeordnet und mit diesen verbunden. Dadurch wird erreicht, dass die zumindest zwei CFK-Schichten mit der von ihnen eingeschlossenen Metallfolienschicht innig verbunden sind. Im Versagensfall weist das Faserverbundmaterial zwar ein sprödes Verhalten auf, jedoch wird durch die Kombination mit den in ein solches Laminat eingebetteten, relativ hochelastischen und duktilen Metallblechen bzw. -schichten allerdings ein gewisses elastisches-plastisches Verhalten erzielt.

In bevorzugter Anordnung erstreckt sich die zumindest eine gegenüber den CFK-Schichten korrosionsbeständige Metallfolienschicht in Längsrichtung des Faserverbundbauteils. Dadurch wird eine Absorption von Kräften erreicht, die bei einem Aufprall auftreten können, indem die duktile Metallschicht verformt wird und aufgrund ihrer hohen Elastizität ein schlagartiges Bersten bzw. Brechen der Faserverbundschichten verzögert.

Die zumindest eine gegenüber den CFK-Schichten korrosionsbeständige Metallfolienschicht kann in einer Ausführung eine Blechplatte mit einer Stärke von 0,2 mm bis 0,3 mm, bevorzugt 0,15 mm bis 0,2 mm, sein. Dabei weist die gegenüber CFK korrosionsbeständige Metallfolienschicht ein Metall mit einer hohen Duktilität, vorzugsweise mit einem Wert von zumindest 20 %, auf.

Ein derartiges Metall kann zum Beispiel ein geeigneter Edelstahl sein. Bevorzugt ist hierfür in einer weiteren Ausführung ein hochreiner Titanwerkstoff, beispielsweise ein für Luftfahrt geeignetes reines Titan mit der Einstufung Grad 2.

In einer noch weiteren Ausführung kann die zumindest eine gegenüber den CFK-Schichten korrosionsbeständige Metallfolienschicht eine vorgeformte Gestalt aufweisen. Hierdurch ist es möglich, zum Beispiel auch Faserverbundbauteile mit komplexerer Geometrie entsprechend herzustellen. Die vorgeformte Gestalt kann zum Beispiel für einen Z-Spant in Z-förmiger Gestalt vorgeformt sein.

Zur Schaffung eines gezielten Versagensverhaltens des Faserverbundbauteils ist die zumindest eine gegenüber den CFK-Schichten korrosionsbeständige Metallfolienschicht mit einer Perforation oder Lochung ausgebildet, welche an geeigneter, vorbestimmter Stelle in der Geometrie des Faserverbundbauteils angeordnet ist.

Die zumindest zwei CFK-Schichten weisen in weiterer Ausgestaltung ein aushärtbares Kunstharz, beispielsweise Epoxid-, Polyester-, BMI-Harz oder dergleichen auf, wobei die Erfahrungen mit diesen üblichen Herstellungsverfahren vorteilhaft genutzt werden können. Es ist auch möglich, dass weitere Verbundschichten aus einer Kombination von CFK mit anderen Materialien, wie zum Beispiel Glasfasern, oder nur aus diesen anderen Materialien, auch mit unterschiedlicher Matrix, bestehen können.

Ein erfindungsgemäßes Faserverbundbauteil kann bevorzugt als Spant bzw. Spantabschnitt, Verbindungs- bzw. Anschlusselement oder Stützelement ausgebildet sein. Derartige Bauteile nehmen im Crash-Fall hohe Kräfte auf und sind dann in der Lage, ein erhebliches Maß an Absorption durch Verformungsarbeit bereitzustellen.

In einem Rumpfstrukturabschnitt kann das oben beschriebene Faserverbundbauteil eingebaut sein. Ein solcher Rumpfstrukturabschnitt kann aber auch aus einer Vielzahl gleicher und/oder unterschiedlicher oben beschriebener Faserverbundbauteile bestehen, wodurch gezielt eine so genannte Crash-Zone aufbaubar ist.

Ein Luft- oder Raumfahrzeug kann einen solchen beschriebenen Rumpfstrukturabschnitt aufweisen.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine perspektivische Ansicht eines ersten Ausführungsbeispiels eines erfindungsgemäßen Faserverbundbauteils;
- Fig. 2: eine schematische Ansicht A des ersten Ausführungsbeispiels nach Fig. 1;
- Fig. 3: eine perspektivische Ansicht eines zweiten Ausführungsbeispiels eines erfindungsgemäßen Faserverbundbauteils;
- Fig. 4: eine schematische Ansicht B des zweiten Ausführungsbeispiels nach Fig. 3;
- Fig. 5: eine schematische, vergrößerte Ansicht der Bereiche X nach Fig. 2 und 4; und
- Fig. 6: eine schematische Teilschnittansicht eines Ausführungsbeispiels eines erfindungsgemäßen Rumpfstrukturabschnitts eines Luft- oder Raumfahrzeugs.

In den Figuren bezeichnen dieselben Bezugszeichen gleiche oder funktionsgleiche Komponenten, soweit nichts Gegenteiliges angegeben ist. Weiterhin sind in den Figuren Koordinatensysteme x, y, z und x1, y1, z1 zur besseren Orientierung angegeben.

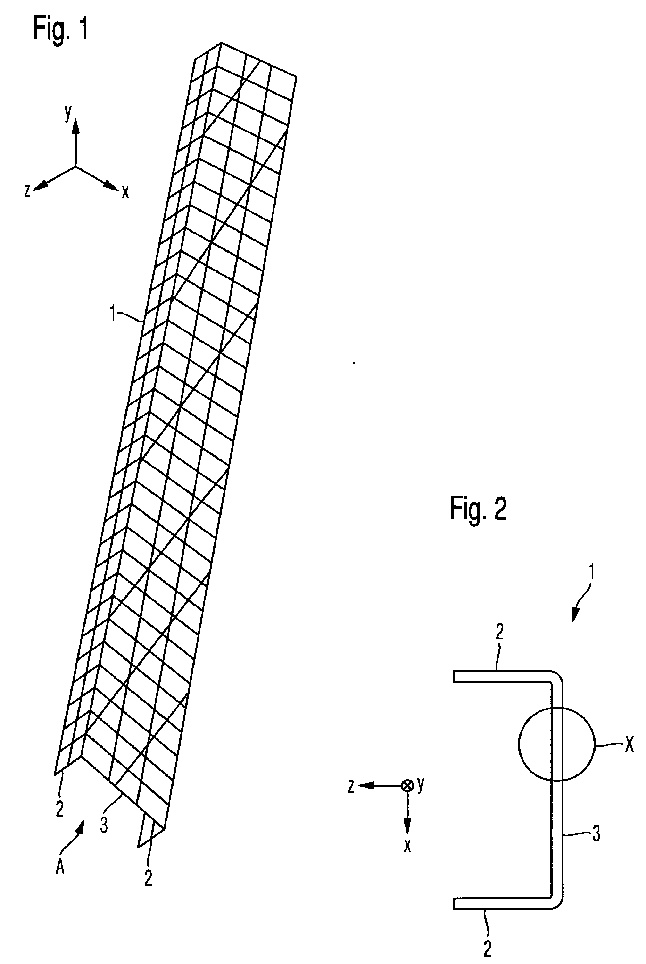

In Fig. 1 ist eine perspektivische Ansicht eines ersten Ausführungsbeispiels eines erfindungsgemäßen Faserverbundbauteils 1 dargestellt. Dieses Faserverbundbauteil 1 weist ein U-förmiges Profil auf, wie in Fig. 2 in einer schematischen Ansicht A des ersten Ausführungsbeispiels nach Fig. 1 dargestellt ist. An einem in Längsrichtung (y-Richtung) des Faserverbundbauteils 1 verlaufenden Steg 3 ist jeweils ein Seitenabschnitt 2 in einem im Wesentlichen rechten Winkel angebracht. Die Seitenabschnitte 2 erstrecken sich in Längsrichtung y und in einer z-Richtung des Faserverbundbauteils 1. Eine Breite in x-Richtung des Stegs 3 verkleinert sich im Verlauf der Längsrichtung des Faserverbundbauteils 1, hier in Fig. 1 von unten nach oben.

Der Steg 3 des Faserverbundbauteils 1 weist zumindest eine sich in Längsrichtung y erstreckende Metallschicht auf, was hier durch eine grobe Schraffur angedeutet ist. Ein Aufbau und Einsatz des Faserverbundbauteils 1 wird weiter unten noch ausführlicher erläutert.

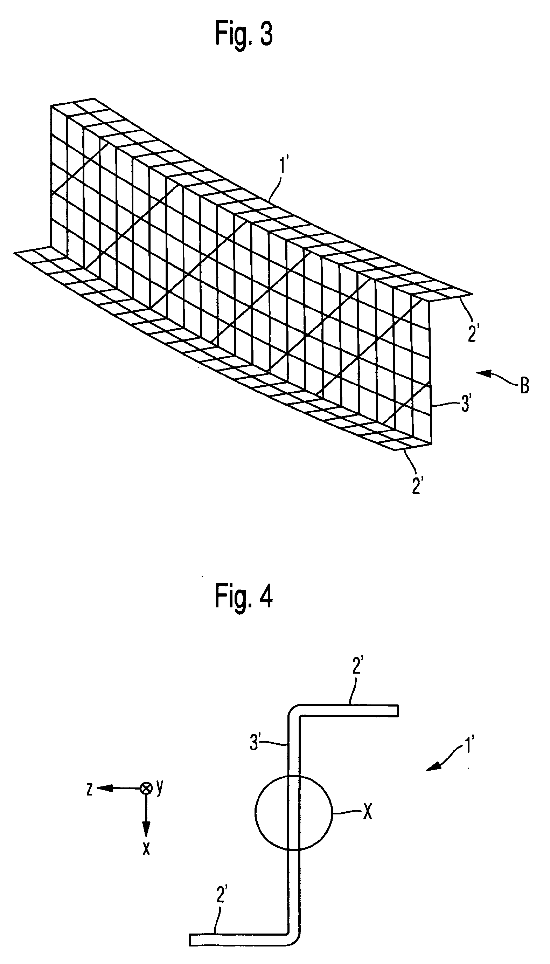

Ein zweites Ausführungsbeispiel eines erfindungsgemäßen Faserverbundbauteils 1' illustriert Fig. 3 in einer perspektivischen Ansicht. Fig. 4 stellt ähnlich Fig. 2 eine schematische Ansicht B auf den Querschnitt des Faserverbundbauteils 1' dar. Es handelt sich bei diesem Teil 1' um einen Spantabschnitt, dessen einer Steg 3' sich in einer xy-Ebene in seiner Längsrichtung gekrümmt erstreckt. Der Steg 3' ist hier an einer oberen Kante mit einem Seitenabschnitt 2' versehen, dessen Breite sich in negativer z-Richtung im Wesentlichen in einem rechten Winkel vom Steg 3' erstreckt. An einer unteren Kante des Stegs 3' ist ein Seitenabschnitt 2' angeformt, dessen Breite in z-Richtung ebenfalls im Wesentlichen in einem rechten Winkel vom Steg 3' verläuft. Die in Fig. 4 dargestellte Ansicht des Querschnitts in Richtung B in Fig. 3 zeigt ein Z-förmiges Profil dieses Faserverbundbauteils 1', dessen Steg 3' ebenfalls wie das erste Ausführungsbeispiel nach Fig. 1 mit zumindest einer Metallschicht versehen ist. Auch diese Metallschicht erstreckt sich in Längsrichtung des Stegs 3' und ist durch eine grobe Schraffierung angedeutet.

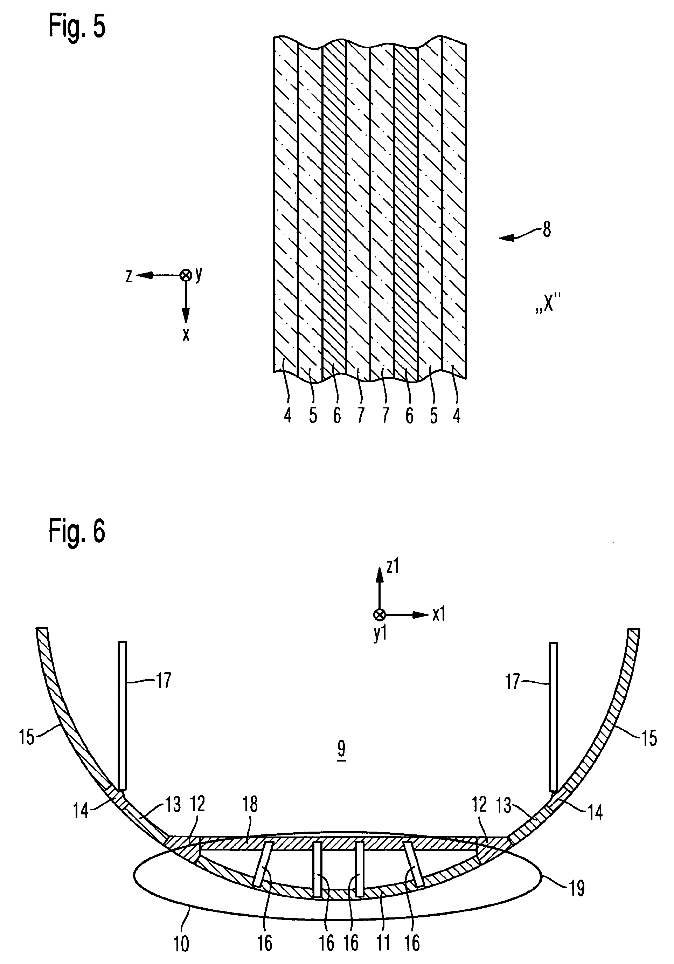

Der Aufbau der Faserverbundbauteile 1 und 1' wird nun anhand der Fig. 5 näher erläutert, welche eine vergrößerte Ansicht der Bereiche X der Fig. 2 und 3 illustriert.

In einem CFK-Verbund 8 ist in z-Richtung eine Vielzahl von Schichten 4, 5, 6, 7 in einer bestimmten Reihenfolge aneinander angeordnet. Ihre Längsrichtungen erstrecken sich in der y-Richtung des jeweiligen Faserverbundbauteils 1, 1'. In dem dargestellten Beispiel sind zwei Metallfolienschichten 6 zwischen Faserverbundschichten, hier CFK-Schichten 4, 5, 7, integriert. Die zwei Metallfolienschichten 6 sind gegenüber den CFK-Schichten 4, 5, 7 korrosionsbeständig. Fasern dieser CFK-Schichten 4, 5, 7 erstrecken sich im Wesentlichen in y-Richtung. Jede Metallfolienschicht 6 ist nach außen hin zunächst von einer CFK-Deckschicht 5 bedeckt, an die sich dann eine CFK-Außenschicht 4 anschließt, welche mit ihrer freien Oberfläche eine Außenseite des CFK-Verbunds 8 bildet. Zur Mitte dieses CFK-Verbunds 8 hin ist jede Metallfolienschicht 6 jeweils mit einer CFK-Innenschicht 7 bedeckt, wobei hier zwei CFK-Innenschichten 6 aneinander liegen. Selbstverständlich sind viele andere Kombinationen und Anzahlen von Schichten möglich.

Ein solcher in Fig. 5 gezeigter hybrider Laminataufbau weist in diesem Beispiel bevorzugt gegenüber den CFK-Schichten 4, 5, 7 korrosionsbeständige Metallfolienschichten 6 aus hochreinem Titan für die Luftfahrt mit einem Grad 2 auf, welche hochelastisch sind. Die gegenüber den CFK-Schichten 4, 5, 7 korrosionsbeständigen Metallfolienschichten 6 sind in diesem Beispiel dünne Titanbleche mit einer Stärke in z-Richtung von ca. 0,2 bis 0,3 mm, bevorzugt 0,15 bis 0,2 mm ausgebildet.

Die Metallfolienschichten 6 können aus ebenen Blechen oder auch aus vorgeformten Blechen in entsprechender Form (siehe Fig. 1 und 3), zum Beispiel U- und/oder Z-Form ausgebildet sein. Andere Formen sind natürlich möglich. Um einen Fertigungsaufwand gering zu halten, kann es sinnvoll sein, nur ebene Bleche zu nutzen, wobei so nur die Stege 3, 3' der Faserverbundbauteile 1, 1' mit einem hybriden Laminataufbau versehen werden.

Die CFK-Schichten 4, 5, 7 sind einem CFK-Verbundmaterial mit zum Beispiel Epoxidharz oder Thermoplasten oder dergleichen hergestellt, wobei die Metallschichten 6 in diesen Laminataufbau bei der Herstellung integriert werden. Die Herstellung kann nasschemische Verfahren beinhalten.

Fig. 6 illustriert eine schematische Teilschnittansicht eines Ausführungsbeispiels eines erfindungsgemäßen Rumpfstrukturabschnitts eines Luft- oder Raumfahrzeugs. Ein Koordinatensystem x1, y1, z1 (unterschiedliche zu den zu den jeweiligen Faserverbundbauteilen 1, 1' gehörenden Koordinatensystemen x, y, z) weist eine Breitenrichtung x1 des nicht dargestellten Luft- oder Raumfahrzeugs, eine Längsrichtung y1 und eine Höhenrichtung z1 auf. In schematischer Weise ist ein unterer Rumpfabschnitt mit einer Crash-Zone 19 dargestellt, welche im Fall eines Aufpralls möglichst viel Aufprallenergie absorbieren soll, um eine oben (hier nicht gezeigte) Passagierkabine von Überbelastungen freizuhalten und den Überlebensraum darin zu sichern.

Die Crash-Zone 19 weist hier einen Bodenspantabschnitt 11 auf, der im Wesentlichen kreisabschnittsförmig ausgebildet und an seinen beiden Enden jeweils mit einem Bodenanschlusselement 12 für einen Frachtraumfußboden 18 eines Frachtraums 9 verbunden ist. Zwischen dem Frachtraumfußboden 18 und dem Bodenspantabschnitt 11 ist eine Vielzahl von Bodenstützelementen 16 verbunden. Die Bodenstützelemente 16 sind zum Beispiel U-förmige Faserverbundbauteile 1 nach Fig. 1 und 2 ausgebildet und weisen den CFK-Verbund 8 nach Fig. 5 mit Metallfolienschichten 6 und CFK-Schichten 4, 5, 7 auf. Sie sind mit ihren Längsrichtungen (jeweilige y-Richtung der zu den Bauteilen gehörenden Koordinaten) zum Teil in z1-Richtung als auch radial verlaufend angeordnet. Der Bodenspantabschnitt 11 und die Bodenanschlusselemente 12 sind zum Beispiel als Z-förmige Spanten wie das Faserverbundbauteil 1' nach Fig. 3 und 4 ebenfalls mit dem CFK-Verbund 8 nach Fig. 5 mit Metallfolienschichten 6 und CFK-Schichten 4, 5, 7 gestaltet. Die Längsrichtungen dieser Spantelemente 11, 12 verlaufen in Umfangsrichtung der Rumpfstruktur.

In diesem Beispiel sind noch weitere Einsatzbereiche der erfindungsgemäßen Faserverbundbauteile 1, 1' und des CFK-Verbunds 8 angegeben. Hierzu können Verbindungsspantabschnitte 13, die sich jeweils an die Bodenanschlusselemente 12 anschließen, gehören und den oben angegebenen Aufbau nach Fig. 3, 4 und 5 besitzen. Weiterhin sind hieran Stützenanschlusselemente 14 und im weiteren Verlauf Seitenspantabschnitte 15 angebracht, die ebenfalls als Faserverbundbauteil 1' ausgestaltet sein können. Ebenso sind Stützelemente 17 als Faserverbundbauteile 1 nach Fig. 1, 2 und 5 möglich, welche einen hier nicht gezeigten Passagierkabinen-Fußbodenträger mit ihren oberen Enden abstützen und mit ihren unteren Enden an den jeweiligen Stützenanschlusselementen 14 befestigt sind. Die Längsrichtungen der Spantelemente 13 bis 15 verlaufen in Umfangsrichtung der Rumpfstruktur, die Längsrichtungen der Stützelemente 17 in diesem Beispiel in z1-Richtung der Rumpfstruktur.

Obwohl die vorliegende Erfindung anhand bevorzugter Ausführungsbeispiele vorliegend beschrieben wurde, ist sie darauf nicht beschränkt, sondern auf vielfältige Weise kombinierbar und modifizierbar.

Beispielsweise können die Metallschichten 6 an bestimmten Stellen so vorbehandelt sein, dass sich ein vorher festlegbares Versagensverhalten, zum Beispiel Ausknicken in eine bestimmte Richtung an einer bevorzugten Stelle, ergibt. Dazu können Perforation, Lochungen, Verformungen, Knickungen und dergleichen dienen.

Es ist auch denkbar, dass die gegenüber CFK korrosionsbeständigen Metallfolienschichten 6 aus Edelstahl oder einem ähnlichen Material mit einer hohen Duktilität ausgebildet sind.

Natürlich können auch andere als die beispielhaft dargestellten und beschriebenen Faserverbundbauteile 1, 1' in anderer Form und Gestalt sowie Einsatzbereich mit dem CFK-Verbund 8 ausgebildet sein.

Bei einem Faserverbundbauteil zur Energieabsorption im Crash-Fall für ein Luft- oder Raumfahrzeug ist das Faserverbundbauteil als Laminataufbau aus CFK-Schichten 4, 5, 7 und zumindest einer integrierten, gegenüber den CFK-Schichten 4, 5, 7 korrosionsbeständigen Metallfolienschicht 6 ausgebildet. Ein Rumpfstrukturabschnitt 10 eines Luft- oder Raumfahrzeugs ist mit zumindest einem solchen Faserverbundbauteil ausgebildet. Ein Luft- oder Raumfahrzeug weist einen solchen Rumpfstrukturabschnitt 10 auf.

### Bezugszeichenliste

- 1, 1': Faserverbundbauteil
- 2, 2': Seitenabschnitt
- 3, 3': Steg
- 4: CFK-Außenschicht
- 5: CFK-Deckschicht
- 6: Metallfolienschicht
- 7: CFK-Innenschicht
- 8: CFK-Verbund
- 9: Frachtraum
- 10: Rumpfstrukturabschnitt
- 11: Bodenspantabschnitt
- 12: Bodenanschlusselement
- 13: Verbindungsspantabschnitt
- 14: Stützenanschlusselement
- 15: Seitenspantabschnitt
- 16: Bodenstützelement
- 17: Stützelement
- 18: Frachtraumfußboden
- 19: Crash-Zone
- x, y, z; x1, y1, z1: Koordinaten

## Patentansprüche

1. Faserverbundbauteil zur Energieabsorption im Crash-Fall für ein Luft- oder Raumfahrzeug, wobei das Faserverbundbauteil als Laminataufbau aus CFK-Schichten (4, 5, 7) und zumindest einer integrierten, gegenüber den CFK-Schichten (4, 5, 7) korrosionsbeständigen Metallfolienschicht (6) ausgebildet ist, wobei die zumindest eine Metallfolienschicht (6) zwischen zumindest zwei CFK-Schichten (4, 5, 7) mit diesen verbunden angeordnet ist und sich in Längsrichtung (y) des Faserverbundbauteils (1, 1') erstreckt, und wobei die zumindest eine Metallfolienschicht (6) aus einem Metall mit einer hohen Duktilität, vorzugsweise mit einem Wert von zumindest 20 %, besteht und für ein gezieltes Versagensverhalten eine Perforation oder Lochung aufweist.

2. Faserverbundbauteil nach Anspruch 1,
**dadurch gekennzeichnet,**
**dass** die zumindest eine Metallfolienschicht (6) eine Blechplatte mit einer Stärke von 0,2 bis 0,3 mm, bevorzugt 0,15 mm bis 0,2 mm, ist.

3. Faserverbundbauteil nach zumindest einem der vorhergehenden Ansprüche,
**dadurch gekennzeichnet,**
**dass** die zumindest eine Metallfolienschicht (6) aus einem hochreinen Titanwerkstoff, beispielsweise für Luftfahrt geeignetes reines Titan Grad 2, besteht.

4. Faserverbundbauteil nach zumindest einem der vorhergehenden Ansprüche,
**dadurch gekennzeichnet,**
**dass** die zumindest eine Metallfolienschicht (6) eine vorgeformte Gestalt aufweist.

5. Faserverbundbauteil nach zumindest einem der vorhergehenden Ansprüche,
**dadurch gekennzeichnet,**
**dass** die CFK-Schichten (4, 5, 7) ein aushärtbares Kunstharz, beispielsweise Epoxid-, Polyester-, BMI-Harz oder dergleichen, aufweisen.

6. Faserverbundbauteil nach zumindest einem der vorhergehenden Ansprüche,
**dadurch gekennzeichnet,**
**dass** das Faserverbundbauteil als Spant bzw. Spantabschnitt (11, 13, 15), verbindungs- bzw. Anschlusselement (12, 14) oder Stützelement (16, 17) ausgebildet ist.

7. Rumpfstrukturabschnitt (10) eines Luft- oder Raumfahrzeugs
**dadurch gekennzeichnet,**
**dass** der Rumpfstrukturabschnitt (10) als Crash- bzw. Aufprallbereich mit zumindest einem Faserverbundbauteil nach zumindest einem der vorhergehenden Ansprüche ausgebildet ist.

8. Luft- oder Raumfahrzeug mit einem Rumpfstrukturabschnitt nach Anspruch 7.

## Claims

1. Fibre composite component for energy absorption in the event of a crash for an aircraft or spacecraft, wherein the fibre composite component is formed from a laminate construction of CFRP layers (4, 5, 7) and at least one integrated metal foil layer (6) which is corrosion-resistant with respect to the CFRP layers (4, 5, 7), wherein the at least one metal foil layer (6) is arranged between at least two CFRP layers (4, 5, 7) and connected thereto and extends in the longitudinal direction (y) of the fibre composite component (1, 1'), and wherein the at least one metal foil layer (6) consists of a metal having a high ductility, preferably of a value of at least 20 %, and comprises perforation or holes for selective failure properties.

2. Fibre composite component according to claim 1, **characterised in that** the at least one metal foil layer (6) is a sheet metal plate having a thickness of 0.2 to 0.3 mm, preferably 0.15 mm to 0.2 mm.

3. Fibre composite component according to at least one of the preceding claims, **characterised in that** the at least one metal foil layer (6) consists of a high-purity titanium material, for example pure titanium grade 2 suitable for aviation.

4. Fibre composite component according to at least one of the preceding claims, **characterised in that** the at least one metal foil layer (6) is of a preformed shape.

5. Fibre composite component according to at least one of the preceding claims, **characterised in that** the CFRP layers (4, 5, 7) comprise a curable plastics material resin, for example epoxy, polyester or BMI resin or the like.

6. Fibre composite component according to at least one of the preceding claims, **characterised in that** the fibre composite component is in the form of a former or former portion (11, 13, 15), connection or attachment element (12, 14) or support element (16, 17).

7. Fuselage structure portion (10) of an aircraft or spacecraft, **characterised in that** the fuselage structure portion (10) is formed as a crash or impact region comprising at least one fibre composite component according to at least one of the preceding claims.

8. Aircraft or spacecraft comprising a fuselage structure portion according to claim 7.

## Revendications

1. Pièce en fibre composite pour l'absorption d'énergie en cas d'accident pour un avion ou un engin spatial, la pièce en fibre composite étant réalisée sous la forme d'une structure stratifiée composée de couches de PRFC (4, 5, 7) et d'au moins une couche de feuille métallique (6) intégrée, résistante à la corrosion en présence des couches de PRFC (4, 5, 7), l'au moins une couche de feuille métallique (6) étant disposée entre au moins deux couches de PRFC (4, 5, 7) reliée avec celles-ci et s'étendant dans la direction longitudinale (y) de la pièce en fibre composite (1, 1'), et l'au moins une couche de feuille métallique (6) étant constituée d'un métal d'une grande ductilité, préférentiellement avec une valeur d'au moins 20 %, et présentant une perforation ou une percée pour un comportement de défaillance ciblé.

2. Pièce en fibre composite selon la revendication 1, **caractérisée par le fait que** l'au moins une couche de feuille métallique (6) est une plaque de tôle de 0,2 à 0,3 mm d'épaisseur, préférentiellement 0,15 mm à 0,2 mm.

3. Pièce en fibre composite selon au moins l'une des revendications précédentes, **caractérisée par le fait que** l'au moins une couche de feuille métallique (6) est constituée d'un matériau titane de haute pureté, par exemple du titane pur grade 2 adapté à l'aéronautique.

4. Pièce en fibre composite selon au moins l'une des revendications précédentes, **caractérisée par le fait que** l'au moins une couche de feuille métallique (6) présente une forme préformée.

5. Pièce en fibre composite selon au moins l'une des revendications précédentes, **caractérisée par le fait que** les couches de PRFC (4, 5, 7) présentent une résine artificielle durcissable, par exemple une résine époxy, polyester, BMI ou similaire.

6. Pièce en fibre composite selon au moins l'une des revendications précédentes, **caractérisée par le fait que** la pièce en fibre composite se présente sous la forme de membrure ou de section de membrure (11, 13, 15), d'élément de liaison ou de raccordement (12, 14) ou d'élément de support (16, 17).

7. Section de structure de fuselage (10) d'un avion ou d'un engin spatial **caractérisée par le fait que** la section de structure de fuselage (10) se présente sous la forme d'une région d'impact ou de collision avec au moins une pièce en fibre composite selon au moins l'une des revendications précédentes.

8. Avion ou engin spatial avec une section de structure de fuselage selon la revendication 7.
